(19) Europäisches Patentamt
European Patent Office
Office européen des brevets

(11) **EP 2 884 354 A1**

(12) **EUROPEAN PATENT APPLICATION**

(43) Date of publication:
**17.06.2015 Bulletin 2015/25**

(51) Int Cl.:
**G05B 13/04** (2006.01)

(21) Application number: **13197035.2**

(22) Date of filing: **12.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Honeywell spol s.r.o.**
**14800 Prague 4 (CZ)**

(72) Inventor: **Baramov, Lubomir**
**14800 Prague (CZ)**

(74) Representative: **Houghton, Mark Phillip**
**Patent Outsourcing Limited**
**1 King Street**
**Bakewell, Derbyshire DE45 1DZ (GB)**

(54) **Model-based predictive controller with steady-state model adaptation**

(57)    A process controller- optimizer with a nonlinear steady-state model includes a model based predictive controller running on a computer to receive measurements of controlled variables and disturbance variables from a process to compute manipulated variables to control the process as a function of a dynamic process model, a filter to provide an estimated state of the process to the model based predictive controller, a steady-state real-time optimizer setting economically optimal steady-state targets to the model-based predictive controller, a model adaptation tool to modify the nonlinear steady state model to be consistent with process data and to modify a linear dynamic model to be consistent with the non linear steady state model in the steady-state, and a quasi steady state estimator to provide estimates of manipulated variables and controlled variables such that they are consistent with a steady state of the process for a given disturbance.

*FIG. 1*

EP 2 884 354 A1

**Description**

**Background**

A real-time optimizer defines an operating region of a process to achieve a long-term cost-efficiency. The optimizer typically spans over multiple units in an industrial process being controlled, and may be plant-wide. The optimizer usually assumes a steady-state operation and a full operational range. Capturing process behavior over the full operational range requires a non-linear model. The role of an advanced model-based predictive controller is to ensure safe operation around an operating point which is determined by the optimizer, to attenuate disturbances, and to handle transitions between operating points. The controller uses a dynamical control model, as it most of the time operates within a region around a given operating point and transitions are relatively infrequent. The dynamical control model may be linearized and may change upon the change of the operational region. The dynamical control model, although localized to an operating region, is more detailed than that of the optimizer, by including process states (which may not be measurable) and disturbances.

Both steady-state and dynamic models are typically obtained off-line, based on controlled experiments on the process. The dynamic and static models should be consistent, meaning that their predictions for steady-states coincide. At the same time, they should be consistent with measured data. However careful was acquiring the model during the off-line phase, the process model can change in time due to changes of environment, raw material compositions, equipment aging, and fouling. For this, an adaptation tool can be included, which collect process data and modifies the steady-state model using some tuning parameters to be consistent with the data. The changes in the steady-state model are then propagated in the dynamic model.

The tool for the steady-state model adaptation processes measured data, implicitly assuming that the process is in the steady state, which is often not true. The adaptation algorithm takes into account process data collected during a certain time interval, during which various short-time variations are averaged out. The process, however, may be subject to slow transitions from one operation point to another. On one hand, it is good for the estimator to have data from multiple operation points. On the other hand, however, during the transition various accumulations of mass/energy may occur, which means that process outputs may lag behind the changes in process inputs, the data may temporarily be inconsistent with the steady-state model, disrupting the adaptation algorithm. As the adaptation algorithm works on the steady-state model only, it has no information on the accumulation flows, which cannot be directly measured on the process.

**Summary**

A multi-layer process controller-optimizer with steady-state model adaptation includes a model based predictive controller running on a computer to receive measurements of controlled variables and disturbance variables from a process to compute manipulated variables to control the process as a function of a dynamic process model, a state estimator (as e.g. Kalman filter) to provide an estimated state of the process to the model based predictive controller, a steady-state real-time optimizer to set economically optimal steady-state targets to the model-based predictive controller, a model adaptation tool to modify the nonlinear steady state model to be consistent with process data and to modify the linear dynamic model to be consistent with the nonlinear steady state model in the steady-state, and a quasi steady state estimator to provide estimates of manipulated variables and controlled variables such that they are consistent with a steady state of the process for a given disturbance.

A method includes receiving process data control variables and disturbance variables from a process to compute, via a model based predictive controller running on a computer, manipulated variables to control the process as a function of a dynamic model, providing an estimated state of the process to the model based predictive controller via a Kalman filter, setting economically optimal steady-state targets for the model-based predictive controller, modifying the steady state model via a model adaptation tool to be consistent with process data, and providing estimates of manipulated variables and controlled variables, via a quasi-steady state estimator, such that they are consistent with a steady state of the process for a given disturbance.

A computer readable storage device having instructions to cause a computer system to implement a multi-layer controller - optimizer with steady-state model adaptation. The controller -optimizer incudes a model based predictive controller to receive measurements of controlled variables and disturbance variables from a process to compute manipulated variables to control the process as a function of a dynamical model, a Kalman filter to provide an estimated state of the process to the model based predictive controller, a steady-state optimizer to provide economically optimal steady-state targets to the model-based predictive controller, a model adaptation tool to modify the steady state model to be consistent with process data, and a quasi-steady-state estimator to provide estimates of manipulated variables and controlled variables such that they are consistent with a steady state of the process for a given disturbance.

## Brief Description of the Drawings

FIG. 1 is a block diagram of a process controller having a quasi steady-state estimator according to an example embodiment.

FIG. 2 is a graph illustrating prediction error by a steady-state model during a transient according to an example embodiment.

FIG. 3 is a graph illustrating variations in process efficiency according to an example embodiment.

FIG. 4 is a graph illustrating changed dependency on fuel flow on steam flow as a result of modified efficiency according to an example embodiment.

FIG. 5 is a block diagram of a linearized dynamic boiler model according to an example embodiment.

FIG. 6 illustrates responses of fuel and steam flows, and quasi-steady-state estimates according to an example embodiment.

FIG. 7 is a graph illustrating output-to-input ratio and a gain estimate based on quasi steady-state according to an example embodiment.

FIG. 8 illustrates responses of fuel and steam flows, and quasi-steady-state estimates obtained with a Kalman filter having model of incorrect gain according to an example embodiment.

FIG. 9 is a graph illustrating output-to-input ratio and a gain estimate based on quasi steady-state obtained with a Kalman filter having a model of incorrect gain according to an example embodiment.

FIG. 10 illustrate responses of fuel and steam flows and quasi-steady-state estimates obtained with a Kalman filter having a process model of correct gain and two unknown input models according to an example embodiment.

FIG. 11 is a graph illustrating output-to-input ratio and a gain estimate, based on quasi steady-state obtained with a Kalman filter having a process model of correct gain and two unknown input models according to an example embodiment.

FIG. 12 is a block diagram of an example computer system for implementing example embodiments.

## Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media such as memory or other type of storage devices. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

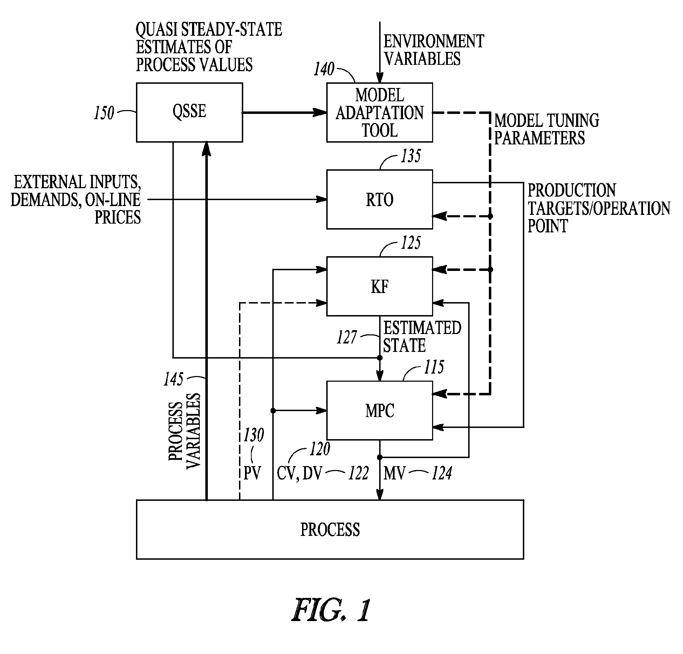

A block diagram of a process control system utilizing a control/optimization hierarchy with state estimation for steady-state model adaptation is illustrated generally at 100 in FIG. 1. A general controlled process 110 is controlled by a model-based predictive controller, MPC 115 that reads process data, namely controlled variables, CV 120 and disturbance variables, DV 122. MPC 115 computes manipulated variables, MV 124 to control process behavior. A Kalman filter, KF 125 (or a similar state estimator) is used as a part of the advanced controller to estimate process states at 127 that are not measured. KF 125 obtains MV, CV and DV from MPC 115. In addition KF 125 may use more of the process measurements than MPC 115 to refine the estimate. The additional process measurements are denoted as PV 130, process variables. The advanced control layer KF 125 and MPC 115 (as well as the higher ones) is not directly connected to the process but communicates with a basic control layer (not shown) that is connected to the necessary instrumentation such as sensors and actuators. Both MPC and KF use a linear dynamical model of the process that may be varying according to the current operating point.

A layer above advanced control 115, 125 is a real-time optimization, RTO 135 layer that aims on the long-term process profitability. Several model-based predictive controllers may be within the scope of the optimizer. The optimizer receives information on external supplies, and demands, resource availability, on-line changing prices etc. The optimizer computes production targets to be achieved within the controller's horizon on the assumption that the process will be in an equilibrial steady-state. RTO uses a steady-state model which is valid for the full operational range, typically a non-linear one.

The internal models within MPC, KF and RTO may be modified by a parameter tuned in the model adaptation tool (MAT) 140. This tool modifies steady-state non-linear model to be consistent with process data provided from the process monitoring as process variables 145. MAT 140 involves an optimization algorithm to achieve the best agreement between the data predicted by the model and process data. It needs to operate in the real time, and to have some sort of recursion to update its state upon receiving fresh data.

At least one algorithm that may be used may be recursive least squares. In addition, some sort of forgetting should be considered in order to track changes in varying model parameters. The adaptation algorithm executed by MAT 140 may be robust to information poor data, as occurs when the system stays in a steady-state for a long time. Hence, variations from the model obtained by the original identification experiment may be limited by the algorithm. One example algorithm for MAT is the use of recursive least-squares with exponential forgetting, that is enhanced by including constraints on the shape of the functional steady-state model. MAT may also detect outliers in process data (due to e.g. sensor faults or any sort of disturbance) and not to use suspicious data or model adaptation.

The system 100 described above will be first described below. To improve the system, a quasi-steady-state estimator (QSSE) 150 is added to convert the KF state estimate in data compensations variables. These compensation variables vanish if the process is in the steady state, even though KF model is of incorrect gain. Details of the QSSE 150 and how it modifies the process values provided to the MAT 140 will be described following a description of operation of system 100 without the QSSE 150 to provide a clearer understanding of the benefits provided by QSSE 150.

A steady-state non-linear model may be expressed in the following forms (the choice depends on the process or the formulation of the RTO optimization problem).

$$\overline{y} = F_y\left(\overline{u},\overline{d}\right), \text{ or } \overline{u} = F_u\left(\overline{y},\overline{d}\right). \tag{1}$$

The over-bar denotes steady-state values; $y$ denotes a PV (not necessarily a CV as used in control), $u$ is MV and $d$ is process disturbance DV. The representation above is the nominal one, representing the process in time when the data for model identification were obtained. The models can be perturbed by additional (vector-valued) parameters to reflect changes in the process as

$$\overline{y} = F_{\theta y}\left(\overline{u},\overline{d},\theta_y\right), \text{ or } \overline{u} = F_{\theta u}\left(\overline{y},\overline{d},\theta_u\right)$$

Obtaining the respective parameter $\theta_u$ or $\theta_y$ is the role of MAT 140. Note that the steady-state model for the optimizer may be explicit in process inputs (MV) and not process outputs (CV/PV) - in the problem formulation of RTO is this classification of variables often irrelevant.

The linear, parameter-varying dynamical representation of the process localized to the neighborhood of a particular operational point given by the couple $(\overline{u},\overline{d})$, can be given, in the continuous-time domain, as

$$\begin{aligned}\dot{x}(t) &= A\left(\overline{u},\overline{d}\right)x(t) + B_u\left(\overline{u},\overline{d}\right)\delta u(t) + B_d\left(\overline{u},\overline{d}\right)\delta d(t) \\ \delta y(t) &= C\left(\overline{u},\overline{d}\right)x(t) + D_u\left(\overline{u},\overline{d}\right)\delta u(t) + D_d\left(\overline{u},\overline{d}\right)\delta d(t)\end{aligned} \tag{2}$$

where $\delta u = u - \overline{u}$, $\delta y = y - \overline{y}$ and $\delta d = d - \overline{d}$. Further, $x$ denotes the process state vector of dimension $n$; $A$, $B_u$, $B_d$, $C$, $D_u$ and $D_d$ are matrices of compatible dimensions. As in (1), matrices in (2) may be alternatively parameterized by the couple $(\overline{y},\overline{d})$; often, the dynamical model can be parameterized by the load $y$ only. Although the process operates in the continuous time, both KF and MPC typically use the equivalent discrete-time representation as

$$\begin{aligned}x(k+1) &= A_D\left(\overline{u},\overline{d}\right)x(k) + B_{Du}\left(\overline{u},\overline{d}\right)\delta u(k) + B_{Dd}\left(\overline{u},\overline{d}\right)\delta d(k) \\ \delta y(k) &= C_D\left(\overline{u},\overline{d}\right)x(k) + D_{Du}\left(\overline{u},\overline{d}\right)\delta u(k) + D_{Dd}\left(\overline{u},\overline{d}\right)\delta d(k)\end{aligned} \tag{3}$$

The correspondence between models (2) and (3) is well known.

The consistency of static non-linear model $\bar{y}=F_y(\overline{u,d})$ with (2) is satisfied, under the assumption of invertibility of matrix $A(\overline{u,d})$, (that implies also invertability of $I\text{-}A_D(\overline{u,d})$, where I is the identity matrix) for

$$K_{y/u}\left(\overline{u},\overline{d}\right):=\left.\frac{\partial F_y\left(u,\overline{d}\right)}{\partial u}\right|_{u=\overline{u}} \quad = \quad -C\left(\overline{u},\overline{d}\right)A\left(\overline{u},\overline{d}\right)^{-1}B_u\left(\overline{u},\overline{d}\right)+D_u\left(\overline{u},\overline{d}\right)$$

$$= \quad C_D\left(\overline{u},\overline{d}\right)\left(I-A_D\left(\overline{u},\overline{d}\right)^{-1}\right)B_{Du}\left(\overline{u},\overline{d}\right)+D_{Du}\left(\overline{u},\overline{d}\right)$$

and

$$K_{y/d}\left(\overline{u},\overline{d}\right):=\left.\frac{\partial F_y\left(\overline{u},d\right)}{\partial d}\right|_{d=\overline{d}} \quad = \quad -C\left(\overline{u},\overline{d}\right)A\left(\overline{u},\overline{d}\right)^{-1}B_d\left(\overline{u},\overline{d}\right)+D_d\left(\overline{u},\overline{d}\right)$$

$$= \quad C_D\left(\overline{u},\overline{d}\right)\left(I-A_D\left(\overline{u},\overline{d}\right)^{-1}\right)B_{Dd}\left(\overline{u},\overline{d}\right)+D_{Dd}\left(\overline{u},\overline{d}\right).$$

$$(4)$$

The cases of the invertibility assumption not holding are those of processes that include pure integrators. In that case, the steady state can be achieved only for a sub-space of $\overline{u}\times\overline{d}$. Solving the problem for those special cases is straightforward but omitted here for brevity.

For representation $\bar{y}=F_y(\overline{u,d})$ we can have alternative conditions

$$K_{y/u}(\overline{y},\overline{d}) \quad = \quad \left(\left.\frac{\partial F_u\left(y,\overline{d}\right)}{\partial y}\right|_{y=\overline{y}}\right)^{-1} = C_D(\overline{y},\overline{d})\left(I-A_D(\overline{y},\overline{d})^{-1}\right)B_{Du}(\overline{y},\overline{d})+D_{Du}(\overline{y},\overline{d}),$$

$$(5)$$

$$K_{y/d}(\overline{y},\overline{d}) \quad = \quad -\left(\left.\frac{\partial F_u\left(y,\overline{d}\right)}{\partial y}\right|_{y=\overline{y}}\right)^{-1}\left.\frac{\partial F_u\left(\overline{y},d\right)}{\partial d}\right|_{d=\overline{d}} = C_D(\overline{y},\overline{d})\left(I-A_D(\overline{y},\overline{d})^{-1}\right)B_{Dd}(\overline{y},\overline{d})+D_{Dd}(\overline{y},\overline{d})$$

$$(6)$$

The invertibility on the right-hand side is a sufficient condition for the equivalence between steady-state models in (1), according to the inverse function theorem. This singularity would imply an arbitrary increase in the outputs upon zero increase in the inputs; it can be expected that the system will not be operated in the region, where this pathological case can occur.

When the non-linear model is parameterized by the tuning parameter, we need to parameterize the dynamical model to guarantee the consistency; a possible option is as follows

$$K_{\theta u/d}\left(\overline{u},\overline{d},\theta_y\right):=\left.\frac{\partial F_{\theta y}\left(u,\overline{d},\theta_y\right)}{\partial u}\right|_{u=\overline{u}} \quad = \quad C_D\left(\overline{u},\overline{d}\right)\left(I-A_D\left(\overline{u},\overline{d}\right)^{-1}\right)B_{\theta Du}\left(\overline{u},\overline{d},\theta_y\right)+D_{Du}\left(\overline{u},\overline{d},\theta_y\right)$$

$$K_{\theta y/d}\left(\overline{u},\overline{d},\theta_y\right):=\left.\frac{\partial F_y\left(\overline{u},d,\theta_y\right)}{\partial d}\right|_{d=\overline{d}} \quad = \quad C_D\left(\overline{u},\overline{d}\right)\left(I-A_D\left(\overline{u},\overline{d}\right)^{-1}\right)B_{\theta Dd}\left(\overline{u},\overline{d},\theta_y\right)+D_{\theta Dd}\left(\overline{u},\overline{d},\theta_y\right)$$

$$(7)$$

Similar parameterization can be done for (5) and (6). The objective for the model adaptation tool is to fit the non-linear model on data, as, e.g., by minimizing the cost function

$$J_k\left(\theta_y\right) = \sum_{i=1}^{k} \lambda^{k-i} \left\| y(k) - F_{\theta y}\left(u(k), d(k), \theta_y\right) \right\|^2 \tag{8}$$

with respect to the parameter $\theta_y$ for each time step $k = 1, 2,...$ . Parameter $\lambda$ is the so-called forgetting factor and is set between 0 and 1. This puts more weight on fresh data than the old ones, thus facilitating the parameter tracking. On the other hand, when the process is not sufficiently excited, and dwells in one steady-state, the optimization problem is ill-posed and certain kind of regularization is necessary. The cost function may involve more penalty terms as e.g. to penalize changes of $\theta_y$. The optimization problem may further involve various constraints in order to prevent the optimizer to produce models significantly different from the nominal model due to low excitation and measurement noises. An equivalent model can be naturally formulated for parameterization involving $\theta_u$.

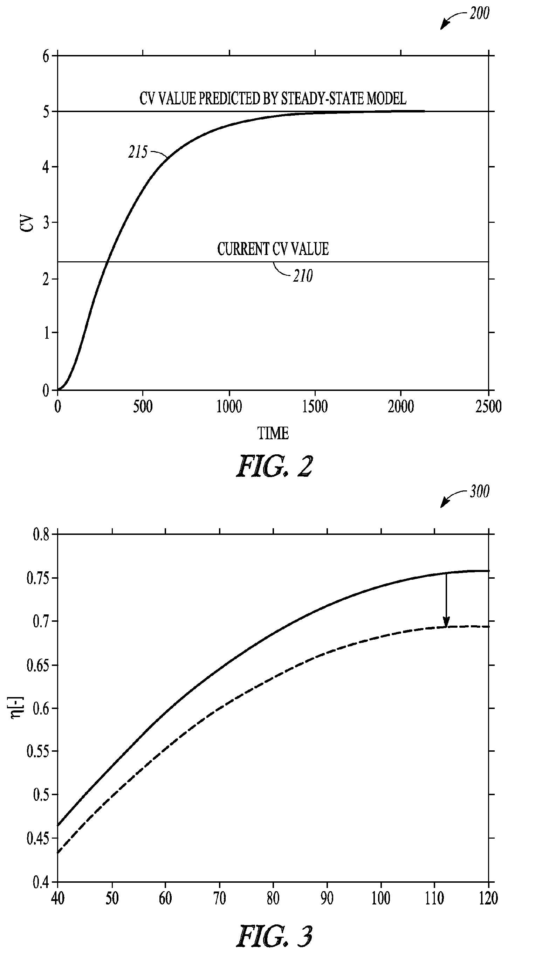

The problem with the formulation in (8) is that there is no guarantee of the process being in the steady-state. In fact, many processes spend in transients most of the time as they adapt to external conditions. During transients, various accumulations of mass and energy occur and the nonlinear model (1) is invalid, as can be seen in FIG. 2 at 200, illustrating prediction error by the steady-state model during a transient. CV is shown for increasing time. Line 210 illustrates a current CV value, while line 215 illustrates a CV value predicted by the steady state model. Fast variations from the steady-state due to unmodelled disturbances do not pose a problem, as they usually average-out, if the forgetting factor is not too small. Long transients with significant accumulations, however, may affect the estimated parameters.

QSSE 150 uses estimated steady-state model parameters 127 during the transients when accumulations occur by distributing the parameter estimation task between MAT 140 and KF 125. Quasi-steady state estimator (QSSE) uses the state 127 estimated by Kalman filter 125 and computes process data corrections that correspond to the 'nearest' steady state.

The role of the Quasi-steady state optimizer 150 is to produce estimates of MV 124 and CV 120, denoted as $\bar{u}_q$ and $\bar{y}_q$, respectively, as well as $\bar{x}_q$, so that they are consistent with a steady-state for given disturbance $d(k)$; and quasi steady state pair $(\bar{u}_q, \bar{x}_q)$ is as close to the pair $(u(k), \hat{x})$ as possible, where $\hat{x}$ is state estimate made by KF.

When considering the discrete-time local state-space model 3, the quasi steady state is obtained from the solution of the minimum-norm solution of the following underdetermined linear equation

$$\begin{bmatrix} B_{Du} & A_D - I \end{bmatrix} \begin{bmatrix} \Delta \bar{u}_q \\ \Delta \bar{x}_q \end{bmatrix} = \left(I - A_D\right)\hat{x} - B_{Du}\delta u(k) - B_{Dd}\delta d(k) \tag{9}$$

$$\Delta \bar{y}_q = C_D \Delta \bar{x}_q + B_{Du} \Delta \bar{u}_q \tag{10}$$

There, the scheduling arguments $(\bar{u}, \bar{d}, \theta_u,)$ or $(\bar{y}, \bar{d}, \theta_y)$ were omitted. It follows that the triple $\partial u_q, (k) = \partial u(k) + \Delta \bar{u}_q (k)$, $\partial y_q(k) = \partial y(k) + \Delta y_q (k)$, $x_q(k) = \hat{x}(k) + \Delta \bar{x}_q(k)$, where $\Delta \bar{u}_q(k)$ and $\Delta \bar{x}_q$ are solutions of (9), characterizes a (quasi-) steady-state for the local model 3. Also note that if the process is indeed in the steady state (assuming now that the KF model is correct), the right-hand side of (9) is zero and thus the minimum-norm solution is zero as well - there is no correction in the true steady state. The corrected process information sent to the Model adaptation Tool 140 is the triple $\{\bar{u}_q(k), \bar{y}_q(k), d(k)\}$, where

$$\bar{u}_q(k) = u(k) + \Delta \bar{u}_q(k), \quad \bar{y}_q(k) = y(k) + \Delta \bar{y}_q(k). \tag{11}$$

The Kalman filter model gain is adapted by the parameter estimator, which in turn, uses corrections based on KF estimate. Hence, at this point, there is no guarantee of the correctness of the KF estimate 127. In particular, if the gain is wrong and the process were in the steady state, the right-hand side of (9) would be non-zero, and so would be the correction variables $\Delta u_q$ and $\Delta y_q$; the equilibrium of KF is facilitated by the innovation term (a well-known notion of Kalman filters) that is nonzero in the steady state, if the model is wrong. This would give the model adaptation tool 140 wrong quasi-steady-state data. Nevertheless, the gain information in these data would be closer to reality than the gain estimate currently built in KF 125; hence, in the future iterations, MAT 140 would gradually adjust the gain of KF 125 so that this state estimator would converge to a steady state as well. But this correction would take a comparatively long time (depending on the forgetting factor setting in MAT). For this, an unknown input observer may be used. It is assumed that the process is perturbed by an unmeasured disturbance. The location of this disturbance within the process model depends on where is the possible gain uncertainty. If it is expected that the uncertainty in the MV - CV channel, MV is perturbed by an offset that is unknown; this offset is modeled by an integrator whose state is estimated by Kalman filter. In KF context it is also called random walk model. The augmented plant is described as

$$
\begin{aligned}
x(k+1) &= A_D x(k) + B_{Du} x_I(k) + B_{Du} \delta u(k) + B_{Dd} \delta d(k) \\
x_I(k+1) &= x_I(k) \\
\delta y(k) &= C_D x(k) + D_{Du} x_I(k) + D_{Du} \delta u(k) + D_{Dd} \delta d(k)
\end{aligned}
\tag{12}
$$

The fictitious input is the additional state $x_1$. This augmented process can be used in QSSE as the original one by substituting

$$
A_D := \begin{bmatrix} A_D & B_{Du} \\ 0 & I \end{bmatrix}, \; B_{Du} := \begin{bmatrix} B_{Du} \\ 0 \end{bmatrix}, \; B_{Dd} := \begin{bmatrix} B_{Dd} \\ 0 \end{bmatrix}, \; C_D = \begin{bmatrix} C_D & D_{Du} \end{bmatrix}.
$$

In that case, the last row in (9) is zero, for both left- and right-hand sides. This form of process model guarantees zero innovation term in the steady-state; model-data mismatch is explained primarily by the unknown offset. In the steady state, the right-hand side of (9) is zero and the data sent to the Model Adaptation Tool are uncorrected. More than one unknown input model may append the process model. However, all these models have to be observable from measured data used by KF. Necessarily, there must be as many measurements than unknown input observers with random walk models.

To summarize the main points of the proposed solution are using KF state estimate in the quasi steady-state estimator to compensate process data for the effects of accumulations, using input disturbance estimate in KF to have zero compensations in the steady state.

An example of model adaptation in a boiler optimization is now described. Although the proposed solution can be applied to control and optimization of any process with nonlinear steady-state model and process dynamics involving accumulation, the boiler was chosen as an example. A boiler steady-state model for the optimizer involves the relationship between the raw-material (fuel) and the product - steam. This relationship is given by the following formula

$$
cF_F = \frac{\Delta h F_S}{\eta\left(F_S, \delta O_2, \delta T_F\right)},
\tag{13}
$$

where $F_F$ and $F_S$ are fuel and steam flows, respectively, in mass-flow units, as kg/s. Symbol $c$ denotes the fuel calorific value in, e.g, Mega Joule per kilogram. $\Delta h$ denotes the enthalpy increase from feed-water to the output steam. Consistently with the above, its unit is again Mega Joule per kilogram. Function $\eta$ denotes the efficiency, depending on the process load (output steam) and other auxiliary variables. First of all, combustion efficiency depends on the air-to-fuel ratio, which is reflected in the oxygen concentration in flue gas. This air-to-fuel ratio is usually controlled so that the flue gas concentration of 02 follows a specific dependency on the load - the so-called Oxygen curve denoted as $\partial O_2$. The efficiency thus can be parameterized by variations of 02 measurements from this oxygen curve. Further auxiliary parameter may be the deviation of flue gas temperature from its nominal value. The efficiency is dimensionless and takes values between 0 and 1. The enthalpy increase depends on the feed-water temperature and pressure and on the temperature and pressure of the output steam. These variables are controlled, although variations are possible.

The steady-state model above may change due to variations of fuel quality (resulting in changes in the fuel calorific value); fouling of heat exchangers (resulting in deterioration of the efficiency).

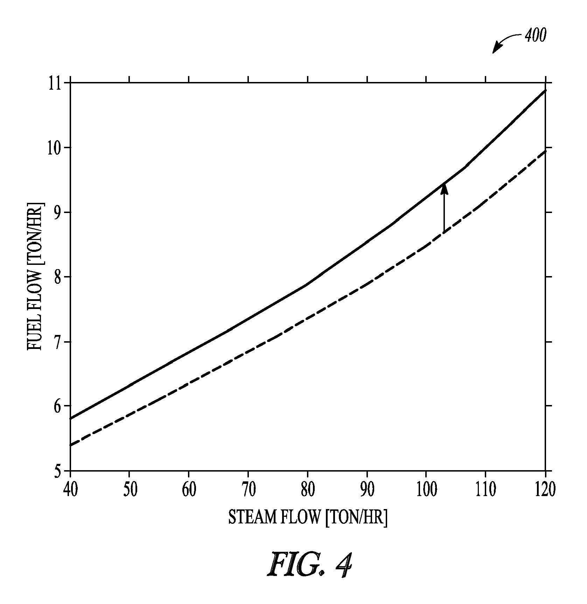

These model changes are gradual, especially the latter one; other model changes are possible, as e.g., changes in the air-to-fuel ratio control. An example plot of the efficiency function $\eta$ (for constant auxiliary parameters) is shown in FIG. 3 at 300; possible efficiency deterioration is shown. FIG. 4 at 400 shows the dependency of fuel consumption on steam load; the effect of the efficiency deterioration is shown. A simple tuning parameterization may be chosen as

$$F_f = F_f\left(F_S, \delta O_2, \delta T, \theta\right) = \theta \frac{\Delta h}{C} \frac{F_S}{\eta\left(F_S, \delta O_2, \delta T\right)} . \qquad (14)$$

This adaptation parameter can compensate for fuel quality variations and to also for efficiency deterioration. Its nominal value is equal to one, and the adaptation algorithm should not allow its value to drift too far from one. Further parametric modifications are possible, e.g., including an additive perturbation. This is omitted here. It is, however, always advisable to keep the number of parameters low, considering the fact that the process data are often information-poor.

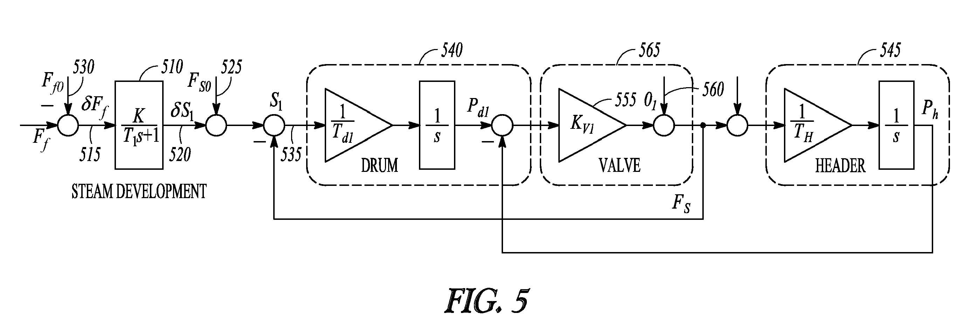

A linearized dynamic model of the boiler is in shown in block flow form at 500 in FIG. 5. It consists of the thermal model 510 consisting of the transfer function from fuel flow variations from the operating point denoted as $\delta F_f$ at 515 on variations of the mass rate of developed steam from a particular operating point, denoted as $\delta S_1$ at 520. The operating point is characterized by the nominal steam flow $F_{s0}$ at 525; the nominal fuel flow $F_{f0}$ at 530 is obtained, so that (13) is satisfied (considering nominal auxiliary variables). Total developed steam 535 is obtained as $S_1 = F_{s0} + \delta S_1$.

Note that steam is being developed within a considerable volume and thus this variable is not accessible for measurement. The thermal model for fuel/steam variations is essentially a low-pass filer; for control purposes, it may be possible to approximate this model by a first-order transfer function. Sometimes, it may be necessary to append this model by a fuel transport model, in particular, for solid fuels, where also some significant accumulation may occur. This is, however, not considered here.

In one embodiment, a drum model 540 is basically modeled as a vessel with material flowing in (developed steam from water) and out (output steam flowing to a steam header 545). The rate of change for the internal pressure in the drum 540 is proportional to the mass balance of steam flows. The steam outflow from the boiler depends on the pressure difference between the boiler and the steam header 545. Header pressure enters this model at 550 as a disturbance. The function for the output flow as the function of pressure difference is non-linear, it is proportional to the square root of the pressure difference. Within a limited range it can be approximated by a gain $K_{v1}$, at 555 and an offset $o_1$ at 560 essentially forming a valve 565. Finally, the header model is again a simple vessel model - the pressure is proportional to the integral if the balance between steam mass flow flowing into the header (i.e., the flow from the drum) and extractions of steam to turbines. This latter extraction is the process disturbance. For simplicity, only one boiler is considered here; multiple parallel boilers feeding steam to a common header are usually present (their load allocation is then subject to real-time optimization). Scaling up the solution to multiple boilers is straightforward.

In the steady state, the drum pressure is constant, which implies equality between steam developed $S_1$ and steam output $F_s$. For the pressure in the drum we have $p_{d1} = (F_s - o)K_{v1} + p_H$. The steam-fuel relationship is, in the steady state, given by $F_s - F_{s0} = K \cdot (F_f - F_{f0})$; This relationship should be consistent with (13), so that for an operating point given by a nominal load $F_{s0}$, he gain $K$ is given by (replacing the auxiliary efficiency parameters by symbol •

$$K = \left( \theta \frac{\Delta h}{C} \left( \frac{1}{\eta\left(F_{S0}, \bullet, \bullet\right)} - \frac{F_{So}}{\eta\left(F_{S0}, \bullet, \bullet\right)^2} \frac{\partial \eta}{\partial F_S}\bigg|_{F_S = F_{S0}} \right) \right)^{-1}$$

The continuous-time state-space model of the process is given by

$$\dot{x}_1 = -\frac{1}{T_1}x_1 + \frac{K}{T_1}\delta F$$

$$\dot{x}_2 = \frac{1}{T_d}\left(x_1 - K_v x_2 + F_{S0} - o + K_v x_3\right) \qquad (15)$$

$$\dot{x}_3 = \frac{1}{T_H}\left(K_v x_2 + o - d\right)$$

State variables $x_1$, $x_2$ and $x_3$ are $\delta S_1$, $p_D$, and $p_H$ respectively. Other variables, including those representing operating point values can be regarded as known inputs. Measurements are given as

$$F_S = K_v(x_2 - x_3) + o$$
$$p_H = x_3$$

$$(16)$$

Of those measurements, only the first one is relevant for the steady-state model. Model (15) includes one pure integrator. Steady-state is characterized by the following equations:

$$\overline{x}_1 = K\delta F$$
$$\overline{F}_S = \overline{x}_1$$
$$\overline{d} = \overline{F}_S$$

Due to the fact that the process involves a pure integrator, steady-state values of MV - $\delta F$ and DV - $d$ are dependent. Further, pressures in the drum and in the header are not fully determined by the steady state, only their difference. Their values are dependent on process history prior to the steady state.

There are accumulation effects that may affect the estimation of parameter $\theta$, including mass accumulation of steam in the drum and in the header, and heat accumulation in water and vessel walls

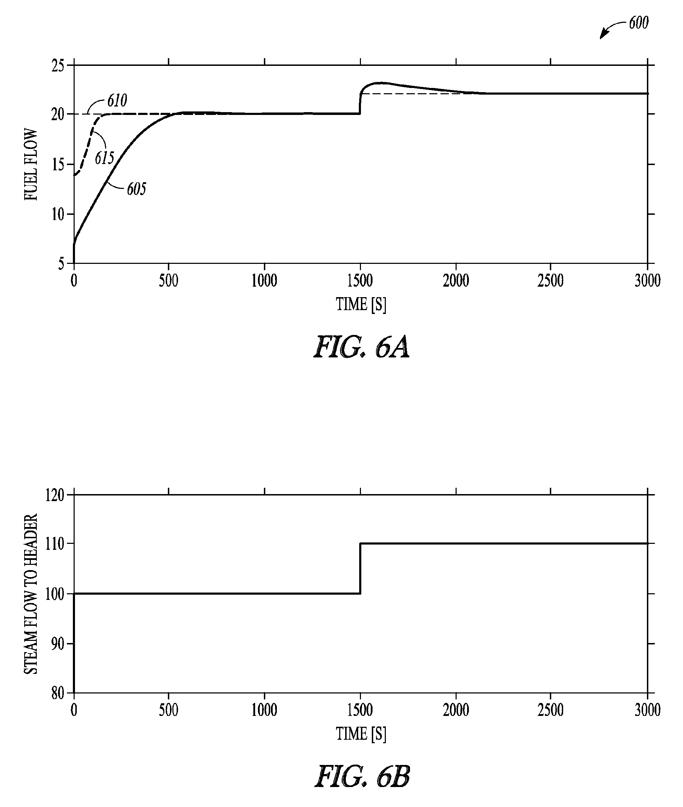

Some simulations demonstrate effects of QSSE 150. Steam flow from the boiler, $F_s$ and header pressure $p_D$ are used as measured PVs for state estimation. One simulation involves a response to initial conditions and a transition of the operation point; this transition is driven by a step-change of the steam extraction from the header and the response by the master pressure controller that adjusts fuel flow accordingly (as the process is unstable, only closed-loop simulations are sensible). Responses are shown in FIG. 6 at 600. Solid line 605 shows the flow variables, the dashed line 610 show quasi-steady state estimates derived from the state of the simulated process, while the dotted line 615 shows the quasi-steady state computed from KF state estimate. The unknown input model is assumed to be added to the fuel input, for the time being. While the ratio between the simulated steam output and fuel input varies during both transition intervals, it remain constant for their quasi steady-states computed from the correct plant state.

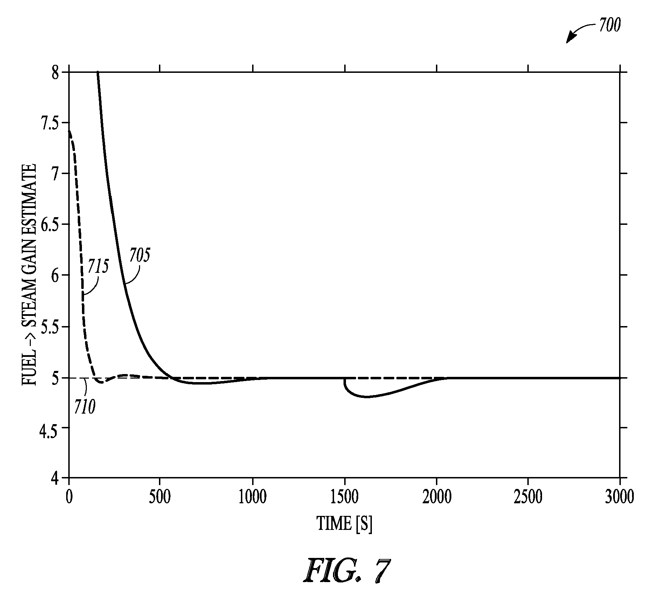

As for quasi-steady state computed using KF state estimate: the steam/fuel gain is correct after the convergence of KF state estimate. The gain estimates are shown in FIG. 7 at 700. Solid line 705 shows the flow variables, the dashed line 710 show quasi-steady state estimates derived from the state of the simulated process, while the dotted line 715 shows the quasi-steady state computed from KF state estimate. Kalman filter model was a correct discrete-time equivalent of the linearized process model.

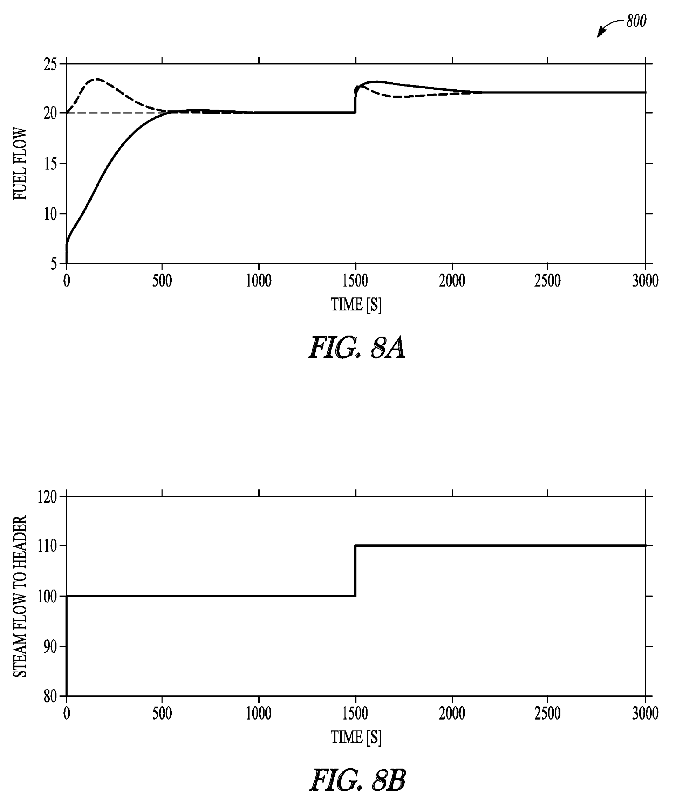

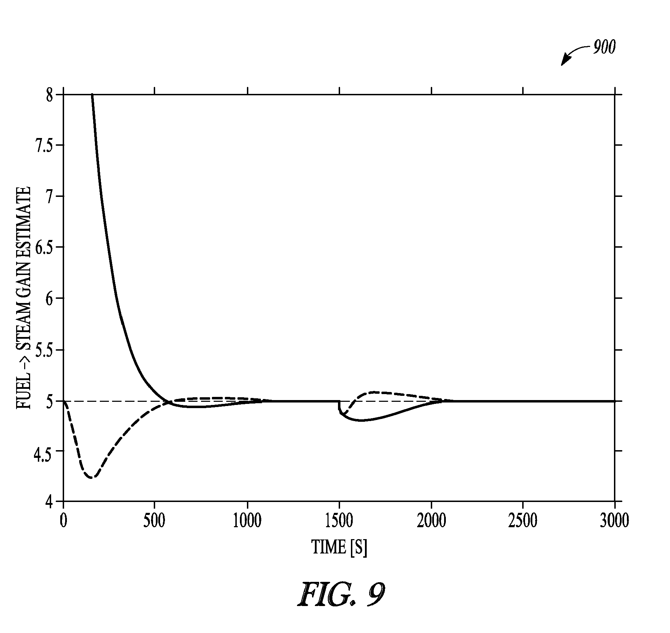

Up to now, the Kalman filter was assumed to have process model of correct gain; the latter is not known exactly and is subj ect to estimation by the model adaptation tool 140. To get a realistic evaluation of quasi-steady state, we shall consider KF model having a considerably different gain from the correct process model. In particular, the gain from fuel input to steam output in KF was chosen as the correct gain multiplied by the factor of 0.75. It can be seen that even if KF operates with the wrong steady-state model, quasi-steady states based on its state are correct upon convergence of KF. Nevertheless, even during the transition the gain error is not significant, as can be observed in FIG. 8 at 800 and FIG. 9 at 900. Note that the other variables are the same as before, obtained using the correct plant model.

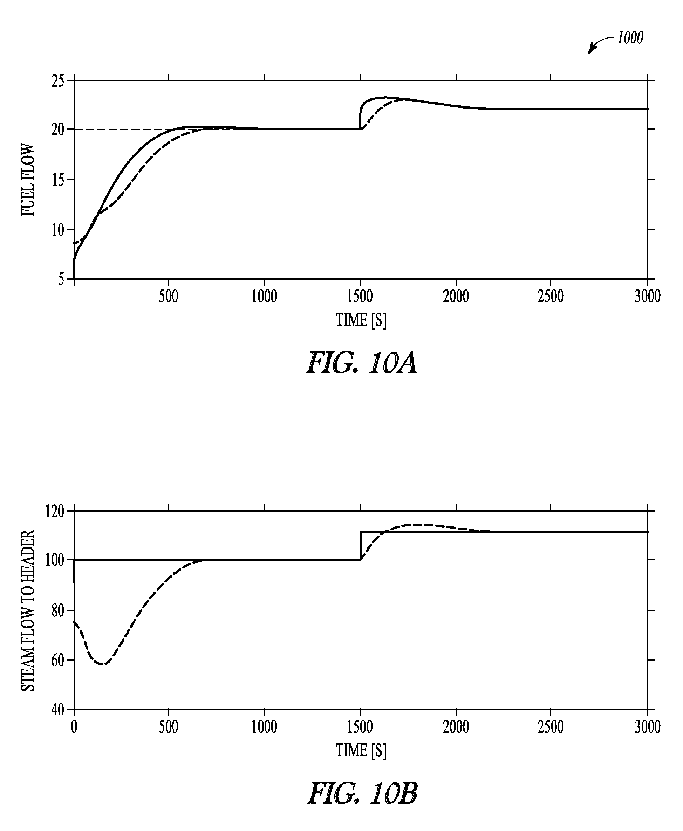

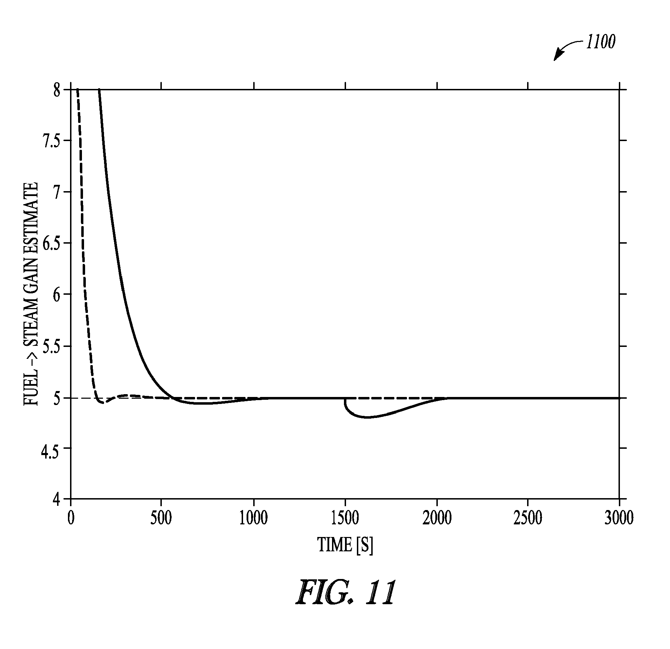

The estimated quasi-steady state of the steam flow to the header is nearly identical to the process variable. This may not be true, in general, as can be seen from evaluating quasi-steady state estimator using Kalman filter with two unknown input estimates - the former is a disturbance affecting fuel input as before; the other is estimating unmeasured consumption of steam, paralleling thus the measured disturbance $d$. It can be the estimate of the flow through reducing stations that is indeed often unmeasured. Its estimate is essential for predictive control of the header pressure, so it is use is necessary. KF has now the correct local process model, including the gain. It can be observed in FIG. 10 at 1000 that quasi-steady state estimates of fuel and steam are quite different from that predicted by QSSE with the correct process state during the transients; note however, that their ratio converges quickly to the correct gain, as can be seen in FIG. 11 at 1100.

A new method for compensating transitions and accumulations in estimating steady-state models uses a Kalman filter state estimate. Kalman filter is often present in the advanced controller, and hence, the implementation costs are low. Only some modifications may be necessary, in particular, appending the process model by unknown input models. A quasi-steady-state estimator 150 is added to convert the KF state estimate 127 in data compensations variables. These compensation variables vanish if the process is in the steady state, even though KF model is of incorrect gain.

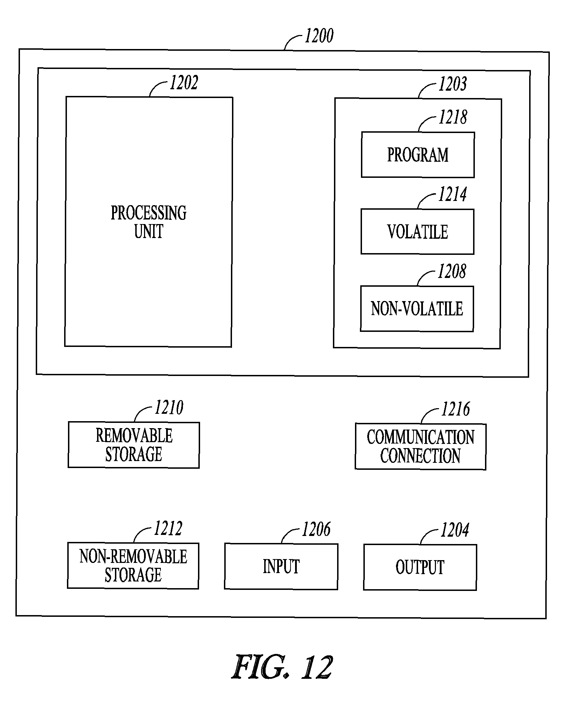

FIG. 12 is a block schematic diagram of a computer system 1200 to implement one or more example embodiments. In one embodiment, multiple such computer systems are utilized in a distributed network to implement multiple components in a transaction based environment. An object-oriented, service-oriented, or other architecture may be used to implement such functions and communicate between the multiple systems and components. One example computing device in the form of a computer 1200, may include a processing unit 1202, memory 1203, removable storage 1210, and non-removable storage 1212. Memory 1203 may include volatile memory 1214 and non-volatile memory 1208. Computer 1200 may include - or have access to a computing environment that includes - a variety of computer-readable media, such as volatile memory 1214 and non-volatile memory 1208, removable storage 1210 and non-removable storage 1212. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 1200 may include or have access to a computing environment that includes input 1206, output 1204, and a communication connection 1216. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN) or other networks.

Computer-readable instructions stored on a computer-readable medium are executable by the processing unit 1202 of the computer 1200. A hard drive, CD-ROM, and RAM are some examples of articles including a non-transitory computer-readable medium. For example, a computer program 1218 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 1200 to provide generic access controls in a COM based computer network system having multiple users and servers.

Examples 1. A multilayer process controller - optimizer with nonlinear steady-state model adaptation comprising:

a model based predictive controller running on a computer to receive measurements of controlled variables and disturbance variables from a process to compute manipulated variables to control the process as a function of a dynamical model;
a filter to provide an estimated state of the process to the model based predictive controller;
a steady-state real-time optimizer setting economically optimal steady-state targets to the model-based predictive controller;
a model adaptation tool to modify the nonlinear steady state model to be consistent with process data and to modify a linear dynamic model to be consistent with the nonlinear steady state model in the steady-state; and
a quasi-steady-state estimator to provide estimates of manipulated variables and controlled variables such that they are consistent with a steady state of the process for a given disturbance.

2. The multilayer process controller - optimizer of example 1 wherein the filter comprises a Kalman filter.

3. The multilayer process controller- optimizer of example 2 wherein the Kalman filter provides an unknown input disturbance estimate to compensate for incorrect model gain in the steady-state.

4. The multilayer process controller- optimizer of any of examples 1-3 wherein the quasi-steady-state estimator converts the estimated state of the process into data compensation variables, modifying the manipulated and controlled variables to be consistent with the steady-state of the process when supplied to the model adaptation tool.

5. The multilayer process controller - optimizer of example 4 wherein the compensation variables vanish when the process is in steady state and the compensated variables supplied to the model adaptation tool coincide with process variables.

6. The process controller of any of examples 1-5 wherein the steady state model comprises a boiler steady state model.

7. The process controller of example 6 wherein the boiler steady state model comprises a linearized dynamic boiler model having a steam developer, a drum, a valve, and a header, with feedback from the header provided to the drum.

8. A method comprising:

receiving measured control variables and disturbance variables from a process to compute, via a model based predictive controller running on a computer, manipulated variables to control the process as a function of a dynamical model;
providing an estimated state of the process to the model based predictive controller via a Kalman filter;
setting economically optimal steady-state targets to the model-based predictive controller via steady-state real-time optimizer using a steady-state model;
modifying the steady state model used by the real-time optimizer via a model adaptation tool to be consistent with process data using parameters tuned by the model adaptation tool;
modifying the (identical) dynamical models used by the model-based predictive controller and by the Kalman filter to be consistent with the steady-state model of the optimizer; and
providing estimates of manipulated variables and controlled variables, via a quasi-steady-state estimator, such that they are consistent with a steady state of the process for a given disturbance to the model adaptation tool.

9. The method of example 8 wherein the Kalman filter provides an unknown input disturbance estimate compensating a possibly incorrect model gain in the steady-state.

10. The method of any of examples 8-9 wherein the quasi-steady-state estimator converts the estimated state of the process into data compensation variables that vanish when the process is in steady state and the compensated variables supplied for model adaptation coincide with process variables.

11. The method of any of examples 8-10 and further comprising providing an optimized operating point for the model based predictive controller via a real time optimizer.

12. The method of example 11 wherein the model based predictive controller comprises a boiler steady state model.

13. A computer readable storage device having instructions to cause a computer system to implement a multilayer controller - optimizer, the controller-optimizer comprising:

a model based predictive controller to receive measured controlled variables and disturbance variables from a process to compute manipulated variables to control the process as a function of a dynamical model;
a filter to provide an estimated state of the process to the model based predictive controller;
a steady-state real-time optimizer setting economically optimal steady-state targets to the model-based predictive controller;
a model adaptation tool to modify the steady state model to be consistent with process data; and
a quasi-steady-state estimator to provide estimates of manipulated variables and controlled variables such that they are consistent with a steady state of the process for a given disturbance.

14. The computer readable storage medium of example 13 wherein the steady state model is nonlinear and wherein the model adaptation tool modifies the nonlinear steady state model to be consistent with process data and modifies a linear dynamic model to be consistent with the nonlinear steady state model in the steady-state.

15. The computer readable storage medium of example 14 wherein the filter comprises a Kalman filter that provides an unknown input disturbance estimate to compensate for incorrect model gain in the steady-state, and wherein the quasi-steady-state estimator converts the estimated state of the process into data compensation variables, modifying the manipulated and controlled variables to be consistent with the steady-state of the process when supplied to the model adaptation tool.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

**Claims**

1. A multilayer process controller - optimizer with nonlinear steady-state model adaptation comprising:

   a model based predictive controller running on a computer to receive measurements of controlled variables and disturbance variables from a process to compute manipulated variables to control the process as a function of a dynamical model;
   a filter to provide an estimated state of the process to the model based predictive controller;
   a steady-state real-time optimizer setting economically optimal steady-state targets to the model-based predictive controller;
   a model adaptation tool to modify the nonlinear steady state model to be consistent with process data and to modify a linear dynamic model to be consistent with the nonlinear steady state model in the steady-state; and
   a quasi-steady-state estimator to provide estimates of manipulated variables and controlled variables such that they are consistent with a steady state of the process for a given disturbance.

2. The multilayer process controller-optimizer of claim 1 wherein the filter comprises a Kalman filter.

3. The multilayer process controller-optimizer of claim 2 wherein the Kalman filter provides an unknown input disturbance estimate to compensate for incorrect model gain in the steady-state.

4. The multilayer process controller-optimizer of claim 1 wherein the quasi-steady-state estimator converts the estimated state of the process into data compensation variables, modifying the manipulated and controlled variables to be consistent with the steady-state of the process when supplied to the model adaptation tool.

5. The multilayer process controller - optimizer of claim 4 wherein the compensation variables vanish when the process is in steady state and the compensated variables supplied to the model adaptation tool coincide with process variables.

6. The process controller of claim 1 wherein the steady state model comprises a boiler steady state model.

7. The process controller of claim 6 wherein the boiler steady state model comprises a linearized dynamic boiler model having a steam developer, a drum, a valve, and a header, with feedback from the header provided to the drum.

8. A method comprising:

receiving measured control variables and disturbance variables from a process to compute, via a model based predictive controller running on a computer, manipulated variables to control the process as a function of a dynamical model;
providing an estimated state of the process to the model based predictive controller via a Kalman filter;
setting economically optimal steady-state targets to the model-based predictive controller via steady-state real-time optimizer using a steady-state model;
modifying the steady state model used by the real-time optimizer via a model adaptation tool to be consistent with process data using parameters tuned by the model adaptation tool;
modifying the (identical) dynamical models used by the model-based predictive controller and by the Kalman filter to be consistent with the steady-state model of the optimizer; and
providing estimates of manipulated variables and controlled variables, via a quasi-steady-state estimator, such that they are consistent with a steady state of the process for a given disturbance to the model adaptation tool.

9. The method of claim 8 wherein the Kalman filter provides an unknown input disturbance estimate compensating a possibly incorrect model gain in the steady-state.

10. The method of claim 8 wherein the quasi-steady-state estimator converts the estimated state of the process into data compensation variables that vanish when the process is in steady state and the compensated variables supplied for model adaptation coincide with process variables.

11. The method of claim 8 and further comprising providing an optimized operating point for the model based predictive controller via a real time optimizer.

12. The method of claim 11 wherein the model based predictive controller comprises a boiler steady state model.

13. A computer readable storage device having instructions to cause a computer system to implement a multi-layer controller - optimizer, the controller-optimizer comprising:

a model based predictive controller to receive measured controlled variables and disturbance variables from a process to compute manipulated variables to control the process as a function of a dynamical model;
a filter to provide an estimated state of the process to the model based predictive controller;
a steady-state real-time optimizer setting economically optimal steady-state targets to the model-based predictive controller;
a model adaptation tool to modify the steady state model to be consistent with process data; and
a quasi-steady-state estimator to provide estimates of manipulated variables and controlled variables such that they are consistent with a steady state of the process for a given disturbance.

14. The computer readable storage medium of claim 13 wherein the steady state model is nonlinear and wherein the model adaptation tool modifies the nonlinear steady state model to be consistent with process data and modifies a linear dynamic model to be consistent with the nonlinear steady state model in the steady-state.

**15.** The computer readable storage medium of claim 14 wherein the filter comprises a Kalman filter that provides an unknown input disturbance estimate to compensate for incorrect model gain in the steady-state, and wherein the quasi-steady-state estimator converts the estimated state of the process into data compensation variables, modifying the manipulated and controlled variables to be consistent with the steady-state of the process when supplied to the model adaptation tool.

QUASI STEADY-STATE
ESTIMATES OF
PROCESS VALUES

ENVIRONMENT
VARIABLES

*150* — QSSE

*140* —

MODEL
ADAPTATION
TOOL

— MODEL TUNING
PARAMETERS

EXTERNAL INPUTS,
DEMANDS, ON-LINE
PRICES

*135*

RTO

PRODUCTION
TARGETS/OPERATION
POINT

*125*

KF

*127* — ESTIMATED
STATE

*145* —

PROCESS VARIABLES

*115*

MPC

*130*

PV

*120*

CV, DV — *122*

MV — *124*

PROCESS

**FIG. 1**

*FIG. 2*

*FIG. 3*

*FIG. 4*

FIG. 5

*FIG. 6A*

*FIG. 6B*

FIG. 7

*FIG. 8A*

*FIG. 8B*

FIG. 9

1000

**FIG. 10A**

**FIG. 10B**

_1100_

FIG. 11

*1200*

*1202* *1203*

*1218*

PROCESSING
UNIT

PROGRAM

*1214*

VOLATILE

*1208*

NON-VOLATILE

*1210*

REMOVABLE
STORAGE

*1216*

COMMUNICATION
CONNECTION

*1212*

NON-REMOVABLE
STORAGE

*1206*

INPUT

*1204*

OUTPUT

*FIG. 12*

Europäisches
Patentamt

European
Patent Office

Office européen
des brevets

# EUROPEAN SEARCH REPORT

Application Number

EP 13 19 7035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/074501 A1 (HARTMAN ERIC J [US] ET AL HARTMAN ERIC JON [US] ET AL) 6 April 2006 (2006-04-06) * paragraph [0001] - paragraph [0012] * * paragraph [0076] - paragraph [0105] * * paragraph [0240] - paragraph [0253] * ----- | 1-15 | INV. G05B13/04 |
| A | S Joe Qin ET AL: "An Overview of Nonlinear Model Predictive Control Applications" In: "Nonlinear Model Predictive Control Progress in Systems and Control Theory Vol. 26", 1 January 2000 (2000-01-01), Springer Basel AG, XP055119947, ISBN: 978-3-03-488407-5 pages 369-392, DOI: http://dx.doi.org/10.1007/978-3-0348-8407-5_21, * the whole document * ----- | 1-15 | |
| A | GB 2 394 312 A (FISHER ROSEMOUNT SYSTEMS INC [US]) 21 April 2004 (2004-04-21) * the whole document * ----- | 1-15 | TECHNICAL FIELDS SEARCHED (IPC) G05B |
| A | GB 2 471 758 A (EMERSON PROCESS MANAGEMENT [US]) 12 January 2011 (2011-01-12) * the whole document * ----- | 1-15 | |

The present search report has been drawn up for all claims

| Place of search | Date of completion of the search | Examiner |
|---|---|---|
| The Hague | 3 June 2014 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 884 354 A1

**ANNEX TO THE EUROPEAN SEARCH REPORT
ON EUROPEAN PATENT APPLICATION NO.**                              EP 13 19 7035

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2014

| Patent document cited in search report | | Publication date | Patent family member(s) | | Publication date |
|---|---|---|---|---|---|
| US 2006074501 | A1 | 06-04-2006 | US | 7058617 B1 | 06-06-2006 |
| | | | US | 2006074501 A1 | 06-04-2006 |
| | | | US | 2006184477 A1 | 17-08-2006 |
| | | | US | 2006224534 A1 | 05-10-2006 |
| GB 2394312 | A | 21-04-2004 | CN | 1514318 A | 21-07-2004 |
| | | | DE | 10341764 A1 | 15-07-2004 |
| | | | GB | 2394312 A | 21-04-2004 |
| | | | GB | 2429539 A | 28-02-2007 |
| | | | GB | 2432682 A | 30-05-2007 |
| | | | GB | 2432683 A | 30-05-2007 |
| | | | HK | 1063223 A1 | 21-12-2007 |
| | | | HK | 1102841 A1 | 25-01-2008 |
| | | | HK | 1102842 A1 | 25-01-2008 |
| GB 2471758 | A | 12-01-2011 | CA | 2709496 A1 | 10-01-2011 |
| | | | CN | 101950315 A | 19-01-2011 |
| | | | DE | 102010026616 A1 | 03-02-2011 |
| | | | GB | 2471758 A | 12-01-2011 |
| | | | US | 2011010138 A1 | 13-01-2011 |

EPO FORM P0459

For more details about this annex : see Official Journal of the European Patent Office, No. 12/82